# EUROPÄISCHE PATENTSCHRIFT

(11) **EP 2 301 315 B1**
(45) Veröffentlichungstag und Bekanntmachung des Hinweises auf die Patenterteilung: **25.07.2012**
(21) Anmeldenummer: 10401144.0
(22) Anmeldetag: 18.08.2010
(51) Int. Cl.: A01C 5/06

(54) **Säschareinheit**
Seed drill coulter unit
Unité de semeuse

(30) Priorität: 29.09.2009 DE 102009044121; 07.04.2010 DE 102010016342
(43) Veröffentlichungstag der Anmeldung: 30.03.2011
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Pokriefke, Michael, 27798 Hude (DE); Schröder, Olaf, 27798 Hude (DE)

(56) Entgegenhaltungen:
- DE-A1-102007 036 662
- DE-U1- 29 801 313
- US-A1- 2010 107 941

## Beschreibung

Die Erfindung betrifft eine Säschareinheit gemäß des Oberbegriffes des Patenanspruches 1.

Eine derartige Säschareinheit ist beispielsweise durch die DE 10 2007 036 662 A1 bekannt. Diese Säschareinheit besteht aus einem Doppelscheibensäschar, welches die Furche vorbereitet. Dieses Säschar weist zwei winklig zueinander angestellte und in den Boden eingreifende und an einem Scharkörper drehbar befestigte Schare, die als Scheiben ausgebildet sind, auf. Diese an einem Scharkörper befestigten Scharscheiben werden von als Laufrädern ausgebildeten Tiefenführungselementen in ihrer Eingriffstiefe in den Boden geführt. Zwischen den sich nach oben und hinten V-förmig öffnenden Scharscheiben des Schares ist ein Furchenformer mittels einer Halterung fest an dem Scharkörper befestigt. An diesem Säfurchenformer ist eine Saatleitung, deren Ausmündung dem hinteren Bereich des Säfurchenformers zugeordnet ist, angeordnet. Durch die Anordnung der Saatleitung an dem Scharkörper ist die Position der Säleitung und deren Ausmündung zu dem Säfurchenformer fest fixiert. Weiterhin ist an dem Scharkörper über eine Halterung eine Saatgutfangrolle angeordnet, die unmittelbar hinter der Ausmündung der Saatleitung angeordnet ist, um die aus der Saatgutleitung nach hinten austretenden oder geschleuderten Saatkörner aufzufangen und in der von dem Säfurchenformer geformten Furche auf deren Grund anzudrücken. Hinter der Saatgutfangrolle sind als Rollen ausgebildete Saatandruckelemente angeordnet. Die Saatgutandruckelemente sind über eine schwenkbar gegenüber dem Scharkörper beweglich und gegen eine zwischen dem Scharkörper und dem Schwenkarm angeordneten Schenkelfeder in Höhenrichtung bewegbar angeordnet.

Bei dieser bekannten Säschareinheit sind während der Ausbringarbeit am Scharkörper die Schare, der Säfurchenformer, die Saatleitung und die Saatandruckrolle in fest fixierter Stellung zueinander angeordnet. Der Scharkörper ist über Parallelogrammlenker am Rahmen der Sämaschine in Höhenrichtung bewegbar angeordnet. Somit sind das Schar, die dem Schar zugeordneten Tiefenführungsrollen der Säfurchenformer, die Saatleitung und die Saatgutfangrolle während des Ausbringens des Saatgutes nur gemeinsam in Höhenrichtung beweglich.

Die Führung dieser Schareinheit, also auch des Furchenformers mit der Ausmündung der Saatleitung und der Saatgutfangrolle erfolgen durch die Tiefenführungselemente des Schares im vorderen Bereich der Säschareinheit.

Diese Art der Tiefenführung für die Säfurchenformer und die Ausmündung der Saatleitung und der Saatgutfangrolle ist bei der Ausbringung vor allem für die eine präzise Ablage erfordernde Saatgüter, wie beispielsweise Raps nicht ausreichend. Sie ist aufgrund der vorderen Anordnung des relativ schweren Schares und des zugeordneten schweren Scharkörpers vor allem bei hohen Fahrgeschwindigkeiten während der Ausbringarbeit zu ungenau.

Durch die SU 609501 A ist eine weitere Säschareinheit bekannt, welche aus einem Scharkörper mit einem Furchenformer und einer gegenüber dem Scharkörper in Höhenrichtung bewegbar angeordneten Saatgutfang- und/oder Saatgutandrückrolle besteht. Die Saatgutleitung ist an dem Scharkörper befestigt, wobei das Ende der Saatgutleitung mit ihrer Ausmündung bewegbar gegenüber dem Scharkörper angeordnet ist. Zwischen in dem Ende der Saatgutleitung und dem die Saatgutfang- und/oder Saatgutandrückrolle tragenden Gelenkarm ist ein Verbindungselement angeordnet, so dass das Ende der Saatgutleitung mit der Rolle in Höhenrichtung bewegbar ist. Nachteilig hierbei ist, dass die Saatgutleitung nicht von dem Scharkörper entkoppelt ist, sondern sämtliche Bewegungen des Scharkörpers mitmachen muss. Weiterhin findet eine Verformung der Saatgutleitung bei einer Höhenbewegung der Rolle gegenüber dem Scharkörper statt. Hierdurch wird die Bewegungsbahn der Saatkörner innerhalb der Saatgutleitung gestört.

Der Erfindung liegt die Aufgabe zugrunde, eine verbesserte Tiefenführung und gleichmäßigere Saatgutablagetiefe sowie Saatgutablage zu erreichen.

Diese Aufgabe wird erfindungsgemäß durch die Merkmale des Kennzeichens des Anspruches 1 gelöst. Infolge dieser Maßnahme ist die Höhenbeweglichkeit der Ausmündung der Saatleitung und des Saatgutfangelementes von den Tiefenführungselementen des vorlaufenden Scharest und dem Schar selbst entkoppelt, so dass der Säfurchenformer mit der Ausmündung der Saatleitung und dem Saatgutfangelement gegenüber dem Schar und dessen Tiefenführungselement unabhängig ist. Hierdurch wird eine verbesserte Säfurchentiefe in größerer Gleichmäßigkeit sowie eine Präzisierung der Saatgutablage erreicht. Hierbei ist von besonderer Bedeutung, dass die Saatgutleitung nicht unmittelbar am Scharkörper befestigt ist, sondern vielmehr dem Scharkörper folgenden Saatgutfang- und/oder Saatgutandrückrolle zugeordnet ist, und somit an der dieser Rolle zugeordneten Halterung befestigt ist.

Dadurch, dass der Furchenformer an der Saatgutleitung angeordnet ist, bildet der Furchenformer gleichzeitig einen Schutz für die Saatgutleitung. Des Weiteren ist eine gute Zuordnung zwischen Furchenformer und Ausmündung der Saatgutleitung gewährleistet.

Weiterhin ist an dem Scharkörper im Bereich des Schares ein Vorfurchenformer beabstandet vor dem der Saatgutleitung zugeordneten Furchenformer angeordnet. Mittels des Vorfurchenformers wird unter schwierigen Bedingung die Furche zunächst vorgeformt und durch den eigentlichen Furchenformer für die Ablage des Saatgut wird die Furche unmittelbar vor der Ablage entsprechend ausgeformt.

Eine einfache Ausgestaltung der Anordnung für die unabhängige Höhenbeweglichkeit des Schares und des Scharkörpers, an dem das Schar angeordnet ist, der am Tragkörper angeordneten Bauteile, lässt sich dadurch erreichen , dass der Tragkörper mittels einer gelenkartigen Halterung an dem Scharkörper in Höhenrichtung bewegbar angeordnet ist.

Eine verbesserte Säfurche mittels des Säfurchenformers wird in einer Ausführung dadurch erreicht, dass der Furchenformer an der gelenkartigen Halterung befestigt ist.

Eine einfache Ausgestaltung von Säfurchenformer, Saatgutleitung mit ihrer Ausmündung und dem Saatgutfangelement lässt sich dadurch erreichen, dass der Säfurchenformer, die Saatgutleitung mit ihrer Ausmündung und das Saatgutfangelement gemeinsames mit dem Tragkörper als ein gemeinsam in Höhenrichtung beweglich angeordnetes Bau- und/oder Funktionsteil ausgebildet sind.

Um die Saatgutandruckrollen bzgl. des Säfurchenformers und der Ausmündung der Saatleitung in einfacher Weise an die jeweiligen Bedingungen in optimaler Weise anpassen zu können, ist vorgesehen, dass die Saatgutandruckrolle mittels einer höhenverstellbaren Halterung an dem Tragkörper angeordnet ist.

Um eine gute Führung des Säfurchenformers mit Saatleitung und deren Ausmündung sowie des Saatgutfangelementes und evtl. angeordneter Saatgutandrückelemente in einfacher Weise zu gewährleisten ist vorgesehen, dass zwischen dem Scharkörper und dem Tragkörper ein den Tragkörper in Richtung des Boden ziehendes elastisches und/oder federndes Element angeordnet ist.

Um in einfacher Weise das abgelegte Saatgut mit ausreichend Erdreich bedecken zu können, ist vorgesehen, dass an dem Tragkörper Striegel- und/oder Zustreichelemente anordbar sind.

Weitere Einzelheiten der Erfindung sind den übrigen Unteransprüchen, der Beispielsbeschreibung und den Zeichnungen zu entnehmen. Hierbei zeigen
- Fig. 1: das Säschar einer Einzelkornsämaschine in Arbeitsstellung und perspektivischer Darstellung, wobei der Furchenformer der Saatleitung zugeordnet ist,
- Fig. 2: das Säschar gemäß Fig. 1 in einer anderen perspektivischer Darstellung und abgenommenen linken Tiefenführungsrad des Schares,
- Fig. 3: das Säschar gemäß Fig. 1 mit abgenommenen linken Tiefenführungsrad des Schares, wobei der Furchenformer der Saatleitung zugeordnet ist,
- Fig. 4: das Säschar gemäß Fig. 1 mit abgenommenen linken Tiefenführungsrad des Schares, wobei der Furchenformer der Saatleitung zugeordnet ist sowie mit einem am Scharkörper angeordnetem Vorfurchenformer und
- Fig. 5: das Säschar gemäß Fig. 1 mit abgenommenen linken Tiefenführungsrad des Schares, wobei der Furchenformer am Scharkörper angeordnet ist.

An zwei sich quer zur Fahrtrichtung erstreckenden, nicht dargestellten Tragbalken sind mittels Parallelogrammlenker 1 mehrere des dargestellten Säschares 2 beabstandet zueinander angeordnet. Diese Säschare 2 sind Bestandteil einer nicht dargestellten pneumatischen Einzelkornsämaschine denen das sich im Vorratsbehälter der Sämaschine befindliche Saatgut über eine Vereinzelungsvorrichtung über pneumatisch beaufschlagte Saatleitungen zugeführt wird. Die Säschare 2 legen die Saatkörner des Saatgutes beabstandet zueinander und gleichmäßig in den von den Furchenöffnungselementen der Säschare 2 gezogenen Furchen ab.

Jedes Säschar 2 weist einen Scharkörper 3 auf, der über die beiden Parallelogrammlenker 1 an dem quer zur Fahrtrichtung verlaufenden Trägern der Querbalkenanordnung in aufrechter Ebene bewegbar angeordnet sind. An dem Scharkörper 3 sind mittels Drehlagerung zwei V-förmig zueinander angeordnete Scharscheiben 4 in Form eines Doppelschares frei drehbar angeordnet. Neben den Scharscheiben 4 sind auf deren Außenseiten der Scharscheiben 4 die die Scheiben 4 in der Tiefe führenden als Gummireifen 5 ausgebildete Tiefenführungselemente angeordnet. Die Scharscheiben 4 räumen den Bereich der Säreihe zur Schaffung der Säfurche frei und formen im Boden eine Furche vor.

Hinter den Scharscheiben 4 des Schares 1 ist an dem Scharkörper 3 mittels eines Tragkörpers 15 einer gelenkartigen Halterung 6 der Furchenformer 7 angeordnet. Dem Furchenformer 7 ist eine Saatleitung 8, die gleichzeitig im Ausführungsbeispiel den Tragarm für den Furchenformer 7 bildet, zugeordnet. Die Saatleitung 8 weist eine Ausmündung 9 im hinteren Bereich des Säfurchenformers 7 auf. Hinter der Ausmündung 9 der Saatleitung 8 ist das als flexible scheibenartige Rollenelement, welches als Saatgutfangelement 10 ausgebildet ist, angeordnet. Das Saatgutfangelement 10 ist drehbar an einem Tragelement 11 angeordnet, welches Bestandteil der gelenkartigen Halterung 6 ist. An der gelenkartigen Halterung 6 ist mittels eines Haltearmes 12 ein als Laufrolle ausgebildetes Saatandrückelement 13 angeordnet. Zwischen der gelenkartigen Halterung 6 und dem Scharkörper 3 ist eine Zugfeder 14 angeordnet, um den Furchenformer 7 und das Saatgutfangelement 10 in Richtung des Bodens zu ziehen. Somit sind der Furchenformer 7, die Saatgutleitung 8 mit ihrer Ausmündung und die Saatgutfangrolle 10 und das Saatgutandrückelement 13 mittels der gelenkartigen Halterung 6 an dem Scharkörper 3 gemeinsam in Höhenrichtung bewegbar gegen die Federkraft der Zugfeder 14 angeordnet. Somit ist der Tragkörper 15 der gelenkartigen Halterung 6 an dem Scharkörper 3 in Höhenrichtung bewegbar angeordnet. Der Säfurchenformer 7, die Saatgutleitung 8 mit ihrer Ausmündung 9 und das Saatgutfangelement 10 sind als gemeinsames mit dem Tragkörper 15 als ein gemeinsames in Höhenrichtung beweglich angeordnetes Bau- oder Funktionsteil ausgebildet. Zusätzlich können der Säschareinheit 2 noch nicht dargestellte Striegelelemente zur Bedeckung des Saatgutes mit Bodenteilen zugeordnet sein.

Die Saatgutleitung 8 ist nicht unmittelbar am Scharkörper 3 angeordnet, sondern vielmehr an dem Tragkörper 15 an der gelenkartigen Halterung 6, der die Rolle 10 trägt. Die Saatgutleitung 8 ist also somit entkoppelt vom Scharkörper 3 angeordnet. Durch die Entkopplung der Saatgutleitung 8 von dem Scharkörper 3 wird eine Verformung der Saatgutleitung 8 im unmittelbaren Bereich der Säschareinheit vermieden, so dass eine verbesserte und ungestörte Saatgutführung im letzten Bereich der Saatgutleitung bis zur Ausmündung 9 vor der Saatgutablage in der Säfurche erreicht wird. Der Furchenformer 7 ist der Saatgutleitung 8 zugeordnet.

Durch die Entkopplung des Säfurchenformers 7 und der Saatgutfangrollen 10 gegenüber den Scharscheiben 4 wird eine verbesserte Sätiefenführung und eine gleichmäßigere Saattiefenablage erreicht. Die Scharscheiben 4 formen eine Säfurche vor, die von dem Säfurchenformer 7 ausgeformt wird, so dass auf den von dem Säfurchenformer 7 ausgeformten Furchengrund der Säfurche das aus der Ausmündung 9 der Saatleitung 8 austretende Saatgut von der Saatgutfangrolle 10 aufgefangen und auf dem Grund der Säfurche in gleichmäßiger Weise abgelegt und angedrückt wird. Die auf dem Saatgut liegenden und es abdeckenden Bodenteile werden durch die nachfolgende Saatandruckrolle 13 angedrückt, so dass das Saatgut entsprechend gute Keimbedingungen erhält.

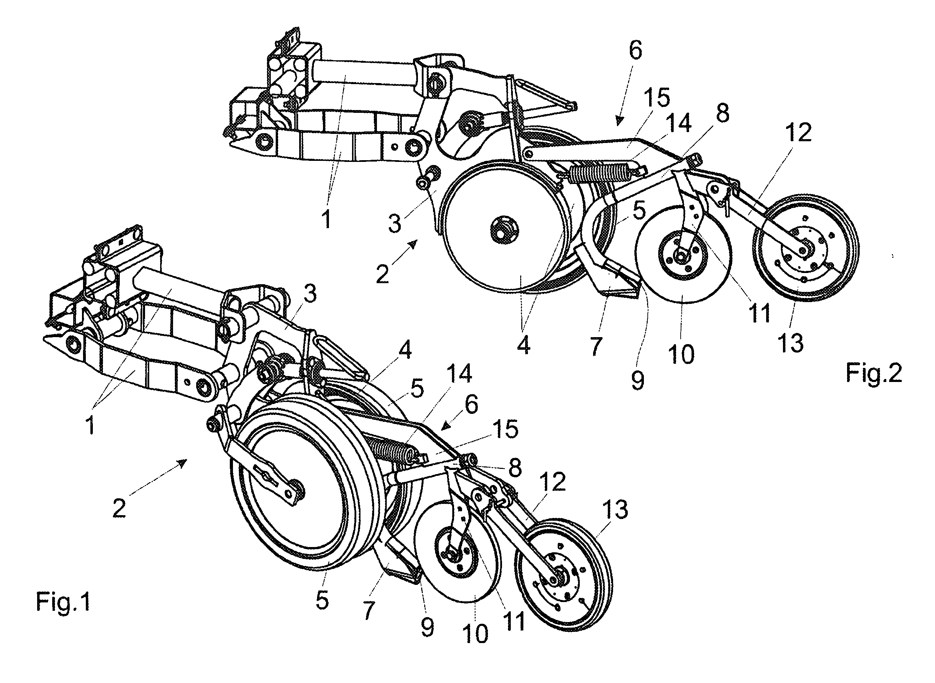

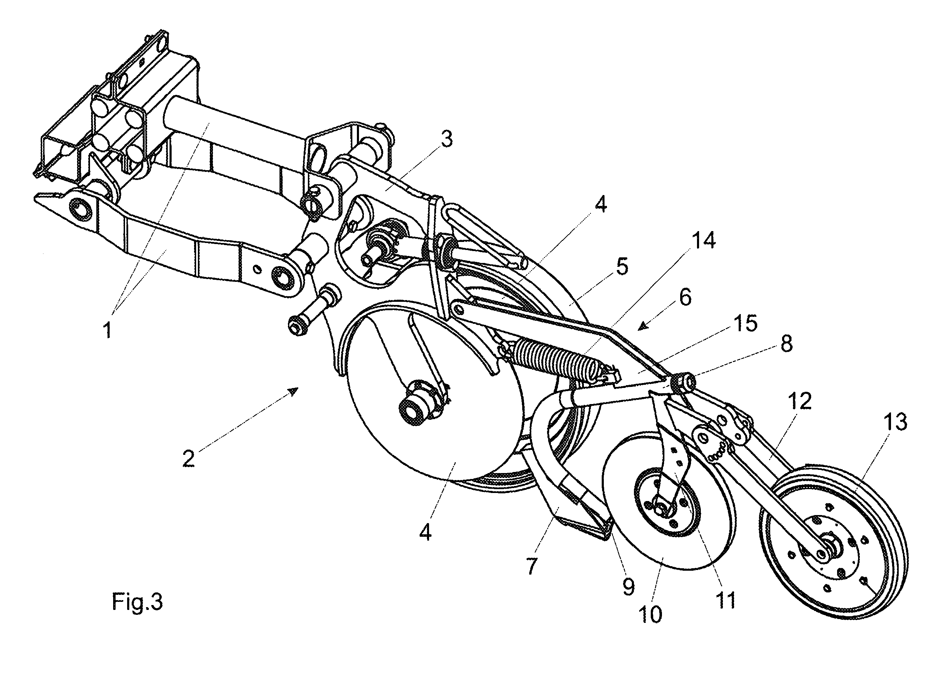

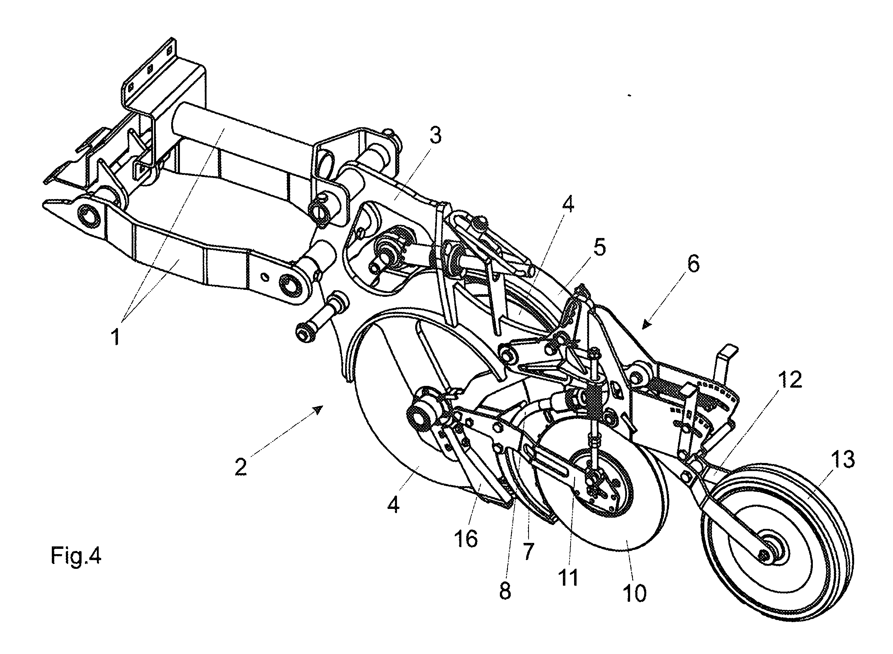

Die Säschareinheit gemäß Fig. 4 unterscheidet sich von der Säschareinheit gemäß den Fig. 1-3 dadurch, dass vor dem Furchenformer 7, der an der Saatgutleitung 8 angeordnet ist, ein Vorfurchenformer 16 beabstandet vor dem Furchenformer 7 an dem Scharkörper 3 angeordnet ist. Der Vorfurchenformer 16 formt die Furche zunächst vor, während der Furchenformer 7 unmittelbar vor der Ablage des Saatgutes die Furche endgültig ausformt.

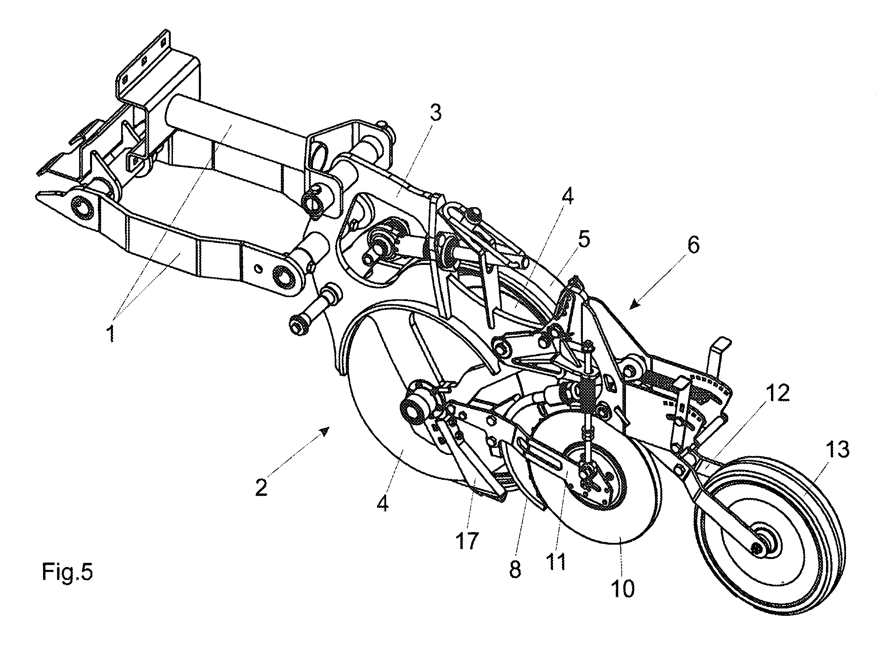

Die Säschareinheit gemäß Fig. 5 unterscheidet sich von der Säschareinheit gemäß den Fig. 1-3 dadurch, dass der Furchenformer 17 nicht an der vom Scharkörper 3 entkoppelten Leitung 8, sondern am Scharkörper 3 angeordnet ist.

## Patentansprüche

1. Säschareinheit, bestehend aus einem eine Säfurche vorbereitenden und in den Boden eingreifenden und zumindest von einem Tiefenführungselement in der Eingriffstiefe geführten und an einem Scharkörper (3) befestigten Schar (4), einem dem Schar (4) folgenden Säfurchenformer (7), einer dem Säfurchenformer (7) zugeordneten und an diesem angeordneten Saatleitung (8) deren Ausmündung (9) dem hinteren Bereich des Säfurchenformers (7) zugeordnet ist, einem hinter der Ausmündung (9) der Saatleitung (8) angeordneten Saatfang (10) und/oder Saatgutandrückelement (12), wobei der Scharkörper des Schares mittels einer Halterung höhenbeweglich an dem Rahmen einer Sämaschine angeordnet ist, wobei der Säfurchenformer (7) und/oder die Saatgutfang- und/oder Saatgutandrückelemente an einem an dem Scharkörper (3) befestigten Tragkörper (15) angeordnet sind, wobei die Saatgutleitung (8) mit ihrer Ausmündung (9) und die Saatgutfang- (10) und/oder Saatgutandrückelemente (13) mittels einer gelenkartigen Halterung (6) an dem Scharkörper (3) gemeinsam in Höhenrichtung bewegbar angeordnet sind, wobei die Saatgutleitung (8) nicht unmittelbar am Scharkörper (3) angeordnet ist, dardurch gekennzeichnet dass der Furchenformer (7) an der Saatgutleitung (8) angeordnet ist, dass an dem Scharkörper (3) im Bereich des Schares (4) ein Vorfurchenformer (16) beabstandet vor dem der Saatgutleitung (8) zugeordneten Furchenformer (7) angeordnet ist.

2. Säschareinheit nach Anspruch 1, **dadurch gekennzeichnet, dass** der Tragkörper (15) mittels einer gelenkartigen Halterung (6) an dem Scharkörper (3) in Höhenrichtung bewegbar angeordnet ist.

3. Säschareinheit nach Anspruch 1, **dadurch gekennzeichnet, dass** der Furchenformer (7) an der gelenkartigen Halterung (6) befestigt ist.

4. Säschareinheit nach zumindest einem der vorstehenden Ansprüche, **dadurch gekennzeichnet, dass** der Säfurchenformer (7), die Saatgutleitung (8) mit ihrer Ausmündung (9) und das Saatgutfangelement (10) gemeinsames mit dem Tragkörper (15) als ein gemeinsam in Höhenrichtung beweglich angeordnetes Bau- und/oder Funktionsteil ausgebildet sind.

5. Säschareinheit nach zumindest einem der vorstehenden Ansprüche, **dadurch gekennzeichnet, dass** die Saatgutandruckrolle (13) mittels einer höhenverstellbaren Halterung an dem Tragkörper (15) angeordnet ist.

6. Säschareinheit nach zumindest einem der vorstehenden Ansprüche, **dadurch gekennzeichnet, dass** zwischen dem Scharkörper (3) und dem Tragkörper (15) ein den Tragkörper (15) in Richtung des Boden ziehendes elastisches und/oder federndes Element (14) angeordnet ist.

7. Säschareinheit nach zumindest einem der vorstehenden Ansprüche, **dadurch gekennzeichnet, dass** die Tiefenführungselemente als Tiefenführungsrollen ausgebildet sind.

8. Säschareinheit nach zumindest einem der vorstehenden Ansprüche, **dadurch gekennzeichnet, dass** an dem Tragkörper (15) Striegel- und/oder Zustreichelemente anordbar sind.

## Claims

1. Seed drill coulter unit, consisting of a coulter (4), which prepares a sowing furrow and penetrates in the soil and is guided in the depth of penetration by at least one depth guiding element and is fastened on a coulter body (3), a sowing furrow former (7) following the coulter (4), a seed line (8) associated with the sowing furrow former (7) and arranged on said sowing furrow former, the mouth (9) of said seed line being associated with the rear region of the sowing furrow former (7), a seed collecting (10) and/or seed pressing element (13) arranged behind the mouth (9) of the seed line (8), wherein the coulter body of the coulter is arranged so as to be vertically displaceable on the frame of a seed drill by means of a holder, wherein the sowing furrow former (7) and/or the seed collecting and/or seed pressing elements are arranged on a carrying body (15) fastened on the coulter body (3), wherein the seed line (8) with its mouth (9) and the seed collecting (10) and/or seed pressing elements (13) are arranged on the coulter body (3) so as to be vertically displaceable together by means of a pivot-joint-like holder (6), wherein the seed line (8) is not arranged directly on the coulter body (3), **characterized in that** the furrow former (7) is arranged on the seed line (8), **in that** a pre-furrow former (16) is arranged on the coulter body (3) in the region of the coulter (4) at a spacing in front of the furrow former (7) associated with the seed line (8).

2. Seed drill coulter unit according to Claim 1, **characterized in that** the carrying body (15) is arranged on the coulter body (3) so as to be vertically displaceable by means of a pivot-joint-like holder (6).

3. Seed drill coulter unit according to Claim 1, **characterized in that** the furrow former (7) is fastened on the pivot-joint-like holder (6).

4. Seed drill coulter unit according to at least one of the preceding claims, **characterized in that** the sowing furrow former (7), the seed line (8) with its mouth (9) and the seed collecting element (10) together with the carrying body (15) are realized as one structural and/or functional part which is arranged so as to be vertically displaceable together.

5. Seed drill coulter unit according to at least one of the preceding claims, **characterized in that** the seed pressing roller (13) is arranged on the carrying body (15) by means of a vertically adjustable holder.

6. Seed drill coulter unit according to at least one of the preceding claims, **characterized in that** an elastic and/or resilient element (14) which pulls the carrying body (15) in the direction of the ground is arranged between the coulter body (3) and the carrying body (15).

7. Seed drill coulter unit according to at least one of the preceding claims, **characterized in that** depth guiding elements are realized as depth guiding rollers.

8. Seed drill coulter unit according to at least one of the preceding claims, **characterized in that** currycomb and/or scraping elements can be arranged on the carrying body (15).

## Revendications

1. Module de soc comprenant :
- un soc (4) préparant un sillon à semence, pénétrant dans le sol et guidé en profondeur par un élément de guidage en profondeur et fixé à un corps de soc (3),
- un formeur de sillon (7) en aval du soc (4),
- une conduite de semence (8) associée au formeur de sillon (7) et installée sur celui-ci et dont la sortie (9) est associée à la région arrière du formeur de sillon (7),
- un élément receveur (10) et/ou tasseur de semence (13) installé derrière l'embouchure (9) de la conduite de semence (8),
* le corps du soc étant installé de manière mobile en hauteur sur le cadre de semoir par l'intermédiaire d'une fixation,
* le formeur de sillon (7) et/ou les éléments receveurs et/ou tasseurs de semence étant installés sur un organe de support (15) fixé au corps de soc (3),
* la conduite de semence (8) étant installée de manière mobile avec son embouchure (9) et les éléments receveurs (10) et/ou tasseurs de semence (13) par l'intermédiaire d'une fixation articulée (6) au corps de soc (3) de manière à être mobiles en hauteur en commun,
* la conduite de semence (8) n'étant pas prévue directement sur le corps de soc (3),
module **caractérisé en ce que**
le formeur de sillon (7) est installé sur la conduite de semence (8),
dans la région du soc (4), le corps de soc (3) comporte un préformeur de fourche (16) situé à distance en amont du formeur de sillon (7) associé à la conduite de semence (8).

2. Module de soc selon la revendication 1,
**caractérisé en ce que**
l'organe de support (15) est installé de manière mobile en hauteur sur le corps de soc (3) par l'intermédiaire d'une fixation articulée (6).

3. Module de soc selon la revendication 1,
**caractérisé en ce que**
le formeur de sillon (7) est solidaire de la fixation articulée (6).

4. Module de soc selon au moins l'une des revendications précédentes,
**caractérisé en ce que**
le formeur de sillon (7), la conduite de semence (8) avec sa sortie (9) et l'élément de réception de semence (10) sont réalisés en commun avec l'organe de support (15) comme pièces de construction et/ou pièces fonctionnelles installées globalement de manière mobile en hauteur.

5. Module de soc selon au moins l'une des revendications précédentes,
**caractérisé en ce que**
le rouleau tasseur de semence (13) est installé sur le corps de support (15) par l'intermédiaire d'un moyen de fixation réglable en hauteur.

6. Module de soc selon au moins l'une des revendications précédentes,
**caractérisé par**
un élément élastique et/ou à ressort (14) tirant le corps de support (15) en direction du sol est installé entre le corps de soc (3) et le corps de support (15).

7. Module de soc selon au moins l'une des revendications précédentes,
**caractérisé en ce que**
les éléments de guidage en profondeur sont des galets de guidage en profondeur.

8. Module de soc selon au moins l'une des revendications précédentes,
**caractérisé en ce que**
le corps de support (15) comporte des éléments de raclage et/ou de refermeture par balayage.
